# EUROPEAN PATENT APPLICATION

(11) **EP 4 321 286 A1**
(43) Date of publication of application: **14.02.2024**
(21) Application number: 21935785.2
(22) Date of filing: 13.10.2021
(51) Int. Cl.: B23D 15/02, B23D 15/06, B23D 33/02, B23D 35/00, B23D 15/14

(54) **INTELLIGENT SHEARING MECHANISM AND STRIP CUT-TO-LENGTH SHEAR**

(30) Priority: 07.04.2021 CN 202110373765
(71) Applicant: CISDI Research and Development Co., Ltd., Chongqing 401122 (CN)
(72) Inventor: YANG, Guchuan, Chongqing 401122 (CN); LI, Hongtu, Chongqing 401122 (CN); YANG, Yuanping, Chongqing 401122 (CN)
(74) Representative: Hertin und Partner Rechts- und Patentanwälte PartG mbB
(86) International application number: PCT/CN2021/123639
(87) International publication number: WO 2022/213567

(57) **Abstract**

An intelligent shearing mechanism and a strip cut-to-length shear. The shearing mechanism comprises an upper cutter blade supporting (5) and a lower cutter blade support (7) that are provided on a frame (8) and vertically and correspondingly arranged; a left connecting rod (3) and a right connecting rod (4) that are arranged side by side are provided between the upper cutter blade supporting (5) and the frame (8); moreover, a left eccentric shaft (1) is provided at the connection between the left connecting rod (3) and the frame (8), and a right eccentric shaft (2) is provided at the connection between the right connecting rod (4) and the frame (8), a guide cylinder rod (6) is hingedly connected between the upper cutter blade support (5) and the frame (8). The shearing mechanism is applied to the strip cut-to-length shear.

## Description

### CROSS-REFERENCE TO RELEVANT APPLICATIONS

The present disclosure claims the priority of the Chinese patent application filed with the China National Intellectual Property Administration on April 07th, 2021 with the application number 202110373765.X, entitled "INTELLIGENT SHEARING MECHANISM AND STRIP CUT-TO-LENGTH SHEAR", the content of which is incorporated herein in its entirety by reference.

### TECHNICAL FIELD

The present disclosure belongs to the technical field of metallurgical machinery and equipment, and particularly, relates to an intelligent shearing mechanism and a strip cut-to-length shear, which are used for shearing heads, segmenting, cutting to length, shearing tails, etc. for hot and cold metal strips with different size specifications when the strips are in a stop state or a moving state.

### BACKGROUND ART

At present, in the process of manufacturing cold and hot metal strips or structural steel plates, for shearing such as shearing strip heads, segmenting, cutting to length and shearing tails, or shearing of continuous casting slab, semi-finished product intermediate slab, etc., one device has only one fixed shearing mechanism, i.e., the vertical shearing mechanism of horizontal blade type, oblique blade type, or concave blade type, or rolling shearing mechanism of arc blade type, for a single use, adapted to the thickness, width, hot state, cold state, moving state, or stop state of shearing material of the strip during steel rolling production, respectively. However, under different size specifications or cold and hot states of strips, the following defects exist: 1) the shearing quality is poor, making it unable to adapt to strips of all size specifications, such as the strips with widths of 1000-5000mm or narrower or wider, and thicknesses of 1~100mm or thinner or thicker; 2) the motor drives the large-center-distance gearbox to drive the fixed shearing mechanism and eccentric shaft, resulting in problems such as high energy consumption, heavy device, and high cost; 3) the strip may not be sheared in both the moving state and the stop state; and 4) the strip may not be sheared in a special shape.

### SUMMARY

In view of this, the present disclosure provides an intelligent shearing mechanism and a strip cut-to-length shear, aiming to solve the problems of poor shearing quality and the inability to adapt to strips of all size specifications.

An innovative idea of the present disclosure is to design an intelligent shearing mechanism. The intelligent shearing mechanism may include an upper blade holder and a lower blade holder that are provided on a frame and arranged correspondingly in a vertical direction, where a left connecting rod and a right connecting rod that are arranged side by side may be provided between the upper blade holder and the frame, a left eccentric shaft may be provided at a joint of the left connecting road and the frame (i.e., portion where the left connecting rod is connected with the frame), and a right eccentric shaft may be provided at a joint of the right connecting rod and the frame (i.e., portion where the right connecting rod is connected with the frame), wherein at least one guide cylinder rod may be hinged between the upper blade holder and the frame.

Optionally, at most two guide cylinder rods may be provided, and a hinge point between the guide cylinder rod and the upper blade holder may be located at middle of a side in a length direction, or a top-end surface of the upper blade holder, or located between the middle of the side and the top-end surface.

Optionally, the left connecting rod and the right connecting rod may be in a cylinder rod structure.

Optionally, the upper blade holder may be provided with at least one sliding plate and roller (at least one combination of a sliding plate and a roller) configured to be in slide cooperation with the frame in the vertical direction.

Optionally, the upper blade holder may be provided with one of a straight knife, an oblique knife, a concave knife, or a curved knife.

Optionally, a special-shaped structure of each of the upper blade holder and the lower blade holder on a horizontal projection thereof is in one of a triangular shape, an arc shape, a rectangular shape, or an oblique shape.

The present disclosure further provides a strip cut-to-length shear that applies the intelligent shearing mechanism as mentioned above.

Preferably, the left eccentric shaft and the right eccentric shaft may each be driven by a group of a speed reducer and a motor; or a synchronous clutch gear transmission group that is driven by a group of a speed reducer and a motor may be provided between the left eccentric shaft and the right eccentric shaft.

Preferably, the frame may be provided with a blade gap adjustment device and a compression cylinder, and a pressure plate may be provided between the compression cylinder and the upper blade holder.

Preferably, the strip cut-to-length shear may further include at least one wheel and sliding plate (i.e. at least one combination of a wheel and a sliding plate), a push-pull cylinder, and a track bracket, where the at least one wheel and sliding plate may be provided on the frame and be in roll or slide cooperation with the track bracket by the push-pull cylinder, and the speed reducer and the motor are in an overall structure relative to the frame.

The advantages of the present disclosure include follows.
1. The present disclosure may switch blades of different shapes when shearing strips with different thicknesses and widths, have good shearing quality, and is suitable for strips of all size specifications on the production line, such as the strips of widths of (not limited to) 1000~5500mm, and thicknesses of (not limited to) 1~100mm.
2. The present disclosure may quickly replace blades based on different shearing speeds and may choose a shearing mechanism in which the eccentric shaft is driven by a motor, to achieve fast shearing to meet production needs, or adjust the phase angle of the eccentric shaft, or choose a shearing mechanism which is driven, to shear, by a hydraulically driven intelligent cylinder rod, to achieve energy conservation and emission reduction.
3. The present disclosure may choose whether the strip may be cut in both moving and stop states based on production needs, in order to improve production efficiency.

Overall, the present disclosure achieves lateral shearing of cold or hot strip materials in a moving or stop state in the metallurgical steel industry, and the upper blade may be quickly replaced with a straight knife, an oblique knife, and a concave knife as required to achieve planar shearing of vertical shearing mechanisms, or may be replaced with a curved knife to achieve rolling shearing of rolling-type shearing mechanisms, thereby achieving multi-functional applications, adapting to thickness, width, hot state, cold state, moving state, and stop state, etc. of the shearing materials required for existing metal plate production.

Other advantages, objectives, and features of the present disclosure will be described, to some extent, in the description that follows, and to some extent, will be apparent to those skilled in the art based on the study and research of the following, or may be taught from the practice of the present disclosure. The objectives and other advantages of the present disclosure may be achieved and obtained by the following description.

### BRIEF DESCRIPTION OF DRAWINGS

In order to make the purposes, technical solutions, and advantages of the present disclosure clearer, the present disclosure will be described in further detail below in conjunction with the drawings, in which:
FIG. 1 is a front view of a strip cut-to-length shear of the present disclosure;
FIG. 2 is a P-P side view of the strip cut-to-length shear in FIG. 1 being in a fixed structure;
FIG. 3 is a P-P side view of the strip cut-to-length shear in FIG. 1 being in a mobile structure;
FIG. 4 is a schematic diagram of a near-end installation of a guide cylinder rod of the shearing mechanism;
FIG. 5 is a schematic diagram of a far-end installation of the guide cylinder rod of the shearing mechanism;
FIG. 6 is a schematic diagram of an upper blade holder of the shearing mechanism, using a straight knife;
FIG. 7 is a schematic diagram of the upper blade holder of the shearing mechanism, using an oblique knife;
FIG. 8 is a schematic diagram of the upper blade holder of the shearing mechanism, using a concave knife;
FIG. 9 is a schematic diagram of the upper blade holder of the shearing mechanism, using a curved knife;
FIG. 10 is a schematic diagram of a left connecting rod and a right connecting rod of the shearing mechanism, which are cylinder rods;
FIG. 11 is a schematic diagram showing special-shaped vertical shearing of the shearing mechanism;
FIG. 12 shows horizontal projections of the upper blade holder and the lower blade holder in FIG. 11, each being in a triangular structure;
FIG. 13 shows horizontal projections of the upper blade holder and the lower blade holder in FIG. 11, each being in a rectangular structure;
FIG. 14 shows horizontal projections of the upper blade holder and the lower blade holder in FIG. 11, each being in an arc structure;
FIG. 15 shows horizontal projections of the upper blade holder and the lower blade holder in FIG. 11, each being in an oblique structure; and
FIG. 16 is a schematic diagram of the shearing mechanism of the strip cut-to-length shear being driven by a synchronous clutch gear transmission group.

Reference signs: 1-left eccentric shaft; 2-right eccentric shaft; 3-left connecting rod; 4-right connecting rod; 5-upper blade holder; 6-guide cylinder rod; 7-lower blade holder; 8-frame; 9-blade gap adjustment device; 10-compression cylinder; 11-pressure plate; 12-speed reducer; 13-motor; 14-synchronous clutch gear transmission group; 15-wheel and sliding plate; 16-push-pull cylinder; 17-track bracket; 18-sliding plate and roller.

a-left eccentric phase angle; b-right eccentric phase angle; n-rotation speed and direction of the left eccentric shaft or the right eccentric shaft; A-hinge point between the guide cylinder rod and the upper blade holder; B-hinge point between the guide cylinder rod and the frame; h- strip thickness; L1-blade length; L2-strip width, and L1>L2.

### DETAILED DESCRIPTION OF EMBODIMENTS

The following illustrates the implementation of the present disclosure through specific examples, those skilled in the art may easily understand other advantages and effects of the present disclosure from the contents disclosed in the present specification. The present disclosure may also be implemented or applied through other different embodiments, various details in the present specification may also be modified or changed in various ways based on different viewpoints and applications without departing from the spirit of the present disclosure. It should be noted that the illustrations provided in the following embodiments only illustrate the basic concept of the present disclosure in a schematic manner. The following embodiments and the features in the embodiments may be combined with each other as long as there is no conflict.

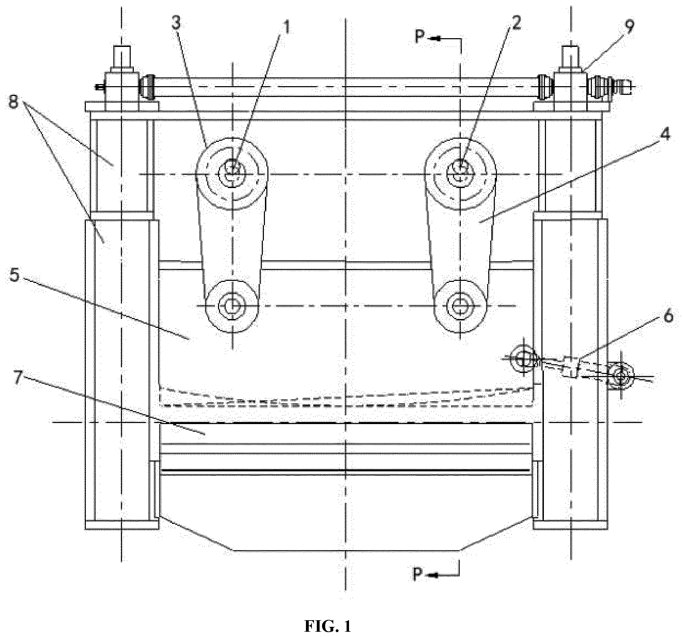

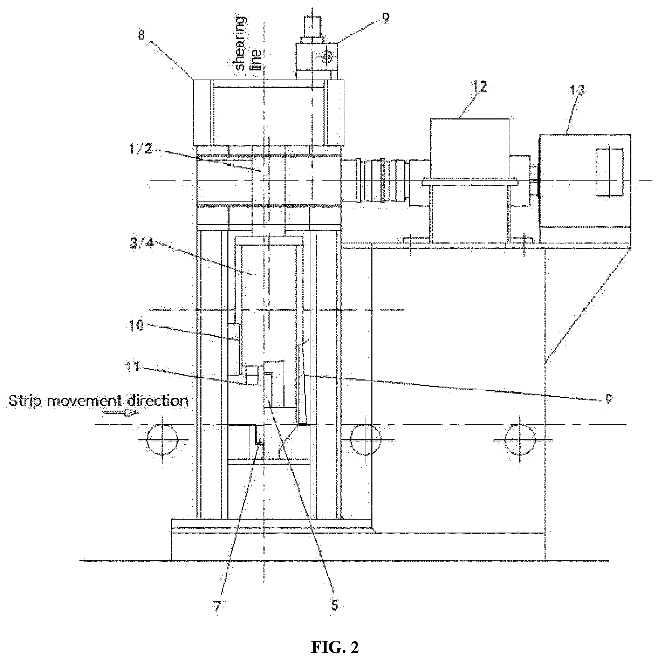

As shown in FIG. 1 and FIG. 2, a strip cut-to-length shear mentioned in an embodiment of the present disclosure may include an intelligent shearing mechanism, a frame 8, a blade gap adjustment device 9, a compression cylinder 10, a pressure plate 11, a speed reducer 12 and a motor 13. The intelligent shearing mechanism may be composed of a left eccentric shaft 1, a right eccentric shaft 2, a left connecting rod 3, a right connecting rod 4, an upper blade holder 5, a guide cylinder rod 6 and a lower blade holder 7. Particularly, the upper blade holder 5 and the lower blade holder 7 are provided on the frame 8 and arranged correspondingly in a vertical direction, a left connecting rod 3 and a right connecting rod 4 that are arranged side by side may be provided between the upper blade holder 5 and the frame 8, a left eccentric shaft 1 may be provided at a joint of the left connecting rod 3 and the frame 8, and a right eccentric shaft 2 may be provided at a joint of the right connecting rod 4 and the frame 8. The left eccentric shaft 1 and the right eccentric shaft 2 may each be driven by a group of a speed reducer 12 and a motor 13 through at least one brake coupling. The lower blade holder 7 may be fixed on the frame 8, and its top surface is flush with a conveyor roller bed of the strip. A guide cylinder rod 6 may be hinged between the upper blade holder 5 and the frame 8. A blade gap adjustment device 9 may be provided on the frame 8, and is mainly composed of a screw rod, an oblique plate, etc., where the oblique plate is driven by the screw rod to move up and down, and the horizontal gap between the oblique plate and the lower blade holder 7 is adjusted by the contact between the oblique plate and the upper blade holder 5, and abutting of a compression cylinder 10 installed on the frame 8 against the opposite side of the upper blade holder 5. The compression cylinder 10 may contain a spring or a hydraulic cylinder, a push head, etc., to horizontally push the upper blade holder 5 to press against the frame to eliminate the gap. A pressure plate 11 may be provided between the compression cylinder 10 and the upper blade holder 5, and may be driven by another hydraulic cylinder to lift and move during the shearing to compress the strip.

When in use, two groups of speed reducers 12 and motors 13 independently and correspondingly drive the left eccentric shaft 1 and the right eccentric shaft 2 respectively to rotate, to make the upper blade holder 5 move vertically and cooperate with the lower blade holder 7 to complete shearing of the strip; and the automatic control of the guide cylinder rod 6 is also used to assist in realizing the vertical motion or the rolling motion trajectory required by the shearing mechanism, and also realize horizontal shearing of the cold or hot strip material in the moving or stop state

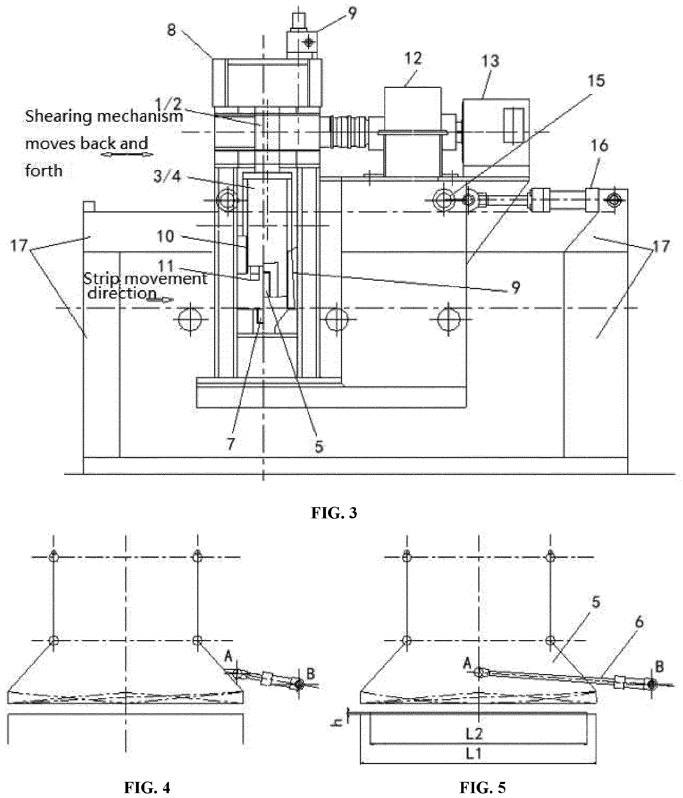

As shown in FIG. 4 and FIG. 5, in the present embodiment, there may be one guide cylinder rod 6, and a hinge point between the guide cylinder 6 and the upper blade holder 5 may be located in the middle of the side or the top-end surface of the upper blade holder 5 in a length direction (the top-end surface being the top in the length direction of the upper blade holder as shown in FIG. 4), or located between the middle of the side and the top-end surface, all achieving the purpose of swinging the upper blade holder. Certainly, in different embodiments, there may also be two guide cylinder rods in order to make the movement smoother.

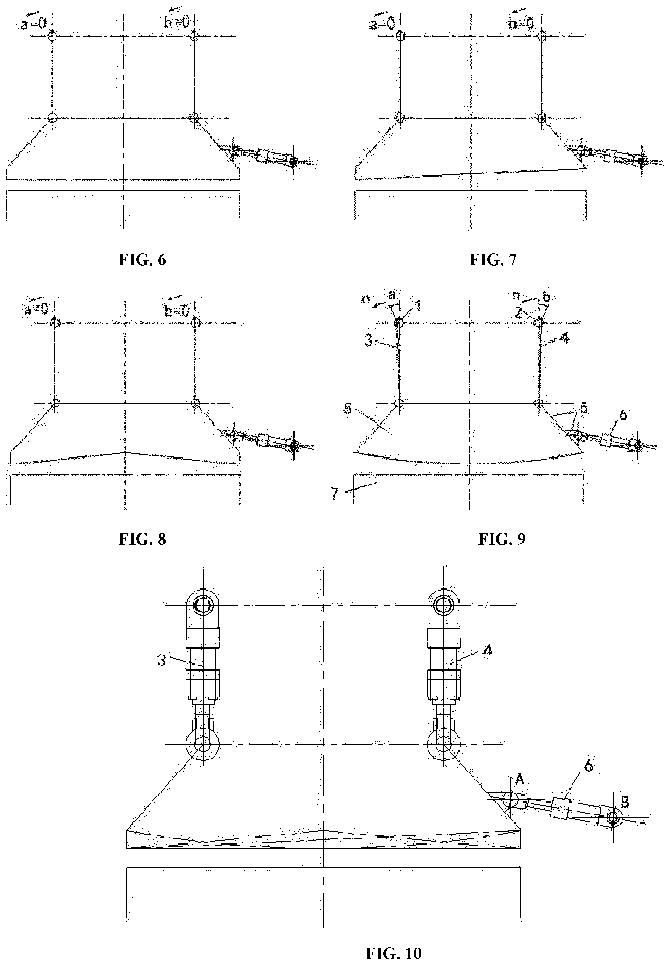

As shown in FIGS 6-9, and 12-15, in the present embodiment, the upper blade holder 5 may be provided with one of a straight knife, an oblique knife, a concave knife, or a curved knife, or a special-shaped structure of each of the upper blade holder 5 and the lower blade holder 7 on a horizontal projection thereof is in one of a triangular shape, an arc shape, a rectangular shape, or an oblique shape. In this way, the upper blade holder may quickly replace the blade with a straight knife, an oblique knife, or a concave knife as required to achieve vertical-motion shearing, or with a curved knife to achieve rolling-motion shearing, or a special-shaped knife of each of the upper and the lower blade holders, with the horizontal projection, vertically moves to shear, thereby achieving multi-functional applications, adapting to thickness, width, hot state, cold state, moving state, and stop state, etc. of the shearing materials required for existing metal production, which meets the market needs such as reducing the number of specifications and models of shearing device in the production workshop, providing good shearing quality, and saving energy and reducing emissions.

In the present embodiment, the strip cut-to-length further includes devices such as a device for quickly replacing upper and lower blades, a blade clamping and releasing device, and a blade lifting device. These are all conventional methods that will not be described in detail.

As shown in FIG. 9 and FIG. 10, another embodiment of the present disclosure will be described below. The difference between this another embodiment and the above-mentioned embodiment is that both the left connecting rod 3 and the right connecting rod 4 are in a cylinder rod structure to obtain the automatic control, and allow that the lifting and lowering of the upper blade holder is completed by it. After the speed reducers 12 and the motors 13 act on the left eccentric shaft 1 and the right eccentric shaft 2, their respective eccentric phase angles are adjusted. For example, the left connecting rod 3 and the right connecting rod 4 are controlled to be contracted when the head of the strip passes, to increase the open degree between the upper blade holder 5 and the lower blade holder 7, and to be extended after the head of the strip passes therethrough, which may reduce the radius of the eccentric shaft, reduce the shearing moment, reduce the motor power, and save energy.

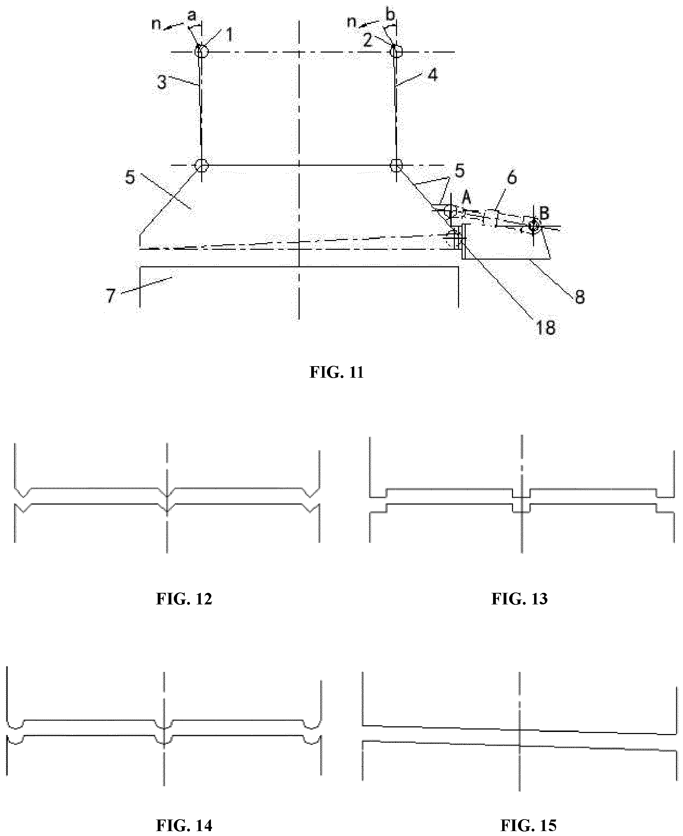

As shown in FIG. 11, yet another embodiment of the present disclosure will be described below. In this yet another embodiment, the upper blade holder 5 may be provided with a sliding plate and roller 18 in slide cooperation with the frame 8 in the vertical direction, with auxiliary use of the vertical movement of the upper blade holder, especially cutting to length by the vertical movement when using special-shaped blades.

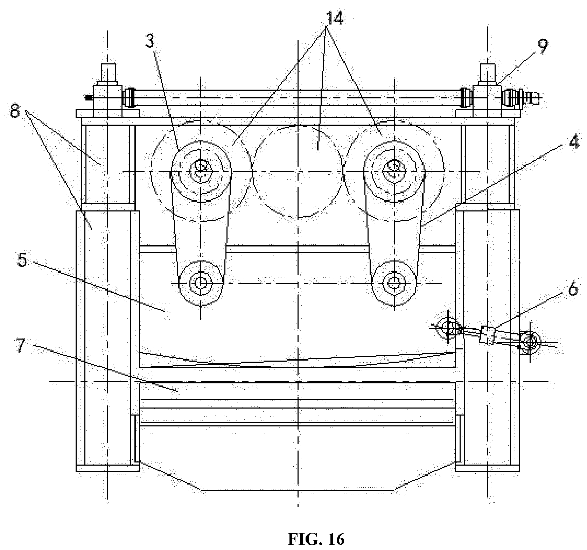

As shown in FIG. 16, still another embodiment of the present disclosure will be described below. In this still another embodiment, a synchronous clutch gear transmission group 14 driven by a group of the speed reducer 12 and the motor 13 may be provided between the left eccentric shaft 1 and the right eccentric shaft 2. The structure may ensure the smooth and reliable vertical movement of the upper blade holder, reduce the power consumption of the speed reducer and the motor, and save costs.

As shown in FIG. 3, another embodiment of the present disclosure will be described below. In this another embodiment, the strip cut-to-length shear may further include at least one wheel and sliding plate 15, a push-pull cylinder 16, and a track bracket 17, the at least one wheel and sliding plate 15 may be provided on the frame 8 and be in roll or slide cooperation with the track bracket 17 through the push-pull cylinder 16, the speed reducer 12 and the motor 13 are in an overall structure relative to the frame 8, which enables the fixed cut-to-length shear to be changed into a mobile cut-to-length shear, and provides working space for other processes in the strip production.

The above are only preferred embodiments of the present disclosure and are not intended to limit the present disclosure. Obviously, those skilled in the art may make various changes and modifications to the present disclosure without departing from the spirit and scope of the present disclosure. In this way, if these modifications and variations of the present disclosure fall within the scope of the claims of the present disclosure and equivalent technologies, the present disclosure is also intended to include these modifications and variations.

### Industrial Applicability

The present disclosure, belonging to the technical field of metallurgical machinery, proposes an intelligent shearing mechanism and a strip cut-to-length shear, where the shearing mechanism includes an upper blade holder and a lower blade holder that are provided on a frame and arranged correspondingly in a vertical direction, a left connecting rod and a right connecting rod that are arranged side by side are provided between the upper blade holder and the frame, a left eccentric shaft is provided at a joint of the left connecting rod and the frame, a right eccentric shaft is provided at a joint of the right connecting rod and the frame, and a guide cylinder rod is hinged between the upper blade holder and the frame. The strip cut-to-length shear applies the shearing mechanism. The present disclosure realizes the lateral shearing of cold or hot strip material in a moving or a stop state in the metallurgical steel industry, and the upper blade may be quickly replaced with a straight knife, an oblique knife, or a concave knife as required to achieve the planar shearing of the vertical shearing mechanism, or replaced with a curved knife to achieve the rolling shearing of the rolling-type shearing mechanism.

In addition, it may be understood that the intelligent shearing mechanism and the strip cut-to-length shear of the present disclosure are reproducible and may be applied in a variety of industrial applications. For example, the intelligent shearing mechanism and the strip cut-to-length shear of the present disclosure may be applied to strips of all size specifications in production lines.

## Claims

1. An intelligent shearing mechanism, comprising an upper blade holder (5) and a lower blade holder (7) that are provided on a frame (8) and arranged correspondingly in a vertical direction, wherein a left connecting rod (3) and a right connecting rod (4) that are arranged side by side are provided between the upper blade holder and the frame, a left eccentric shaft (1) is provided at a joint of the left connecting rod and the frame, a right eccentric shaft (2) is provided at a joint of the right connecting rod and the frame, and at least one guide cylinder rod (6) is hinged between the upper blade holder and the frame.

2. The intelligent shearing mechanism according to claim 1, wherein at most two guide cylinder rods are provided, and a hinge point between each of the guide cylinder rods and the upper blade holder is located at a middle of a side in a length direction, or a top-end surface of the upper blade holder, or is located between the middle of the side and the top-end surface.

3. The intelligent shearing mechanism according to claim 1 or 2, wherein the left connecting rod and the right connecting rod are each in a cylinder rod structure.

4. The intelligent shearing mechanism according to any one of claims 1 to 3, wherein the upper blade holder is provided with at least one sliding plate and roller (18) configured to be in slide cooperation with the frame in the vertical direction.

5. The intelligent shearing mechanism according to any one of claims 1 to 4, wherein the upper blade holder is provided with one of a straight knife, an oblique knife, a concave knife, or a curved knife.

6. The intelligent shearing mechanism according to any one of claims 1 to 5, wherein a special-shaped structure of each of the upper blade holder and the lower blade holder on a horizontal projection thereof is in one of a triangular shape, an arc shape, a rectangular shape, or an oblique shape.

7. A strip cut-to-length shear, wherein the intelligent shearing mechanism according to any one of claims 1 to 6 is applied in the strip cut-to-length shear.

8. The strip cut-to-length shear according to claim 7, wherein the left eccentric shaft and the right eccentric shaft are each driven by a group of a speed reducer (12) and a motor (13); or a synchronous clutch gear transmission group (14) that is driven by a group of a speed reducer (12) and a motor (13) is provided between the left eccentric shaft and the right eccentric shaft.

9. The strip cut-to-length shear according to claim 7 or 8, wherein the frame is provided with a blade gap adjustment device (9) and a compression cylinder (10), and the pressure plate (11) is provided between the compression cylinder and the upper blade holder.

10. The strip cut-to-length shear according to claim 8 or 9, further comprising at least one wheel and sliding plate (15), a push-pull cylinder (16), and a track bracket (17), wherein the at least one wheel and sliding plate are provided on the frame and configured to be in roll or slide cooperation with the track bracket by the push-pull cylinder, and the speed reducer and the motor are in an overall structure relative to the frame.

11. The strip cut-to-length shear according to claim 7, wherein the two groups of speed reducers and motors independently and correspondingly drive the left eccentric shaft and the right eccentric shaft respectively to rotate, to make the upper blade holder move vertically and cooperate with the lower blade holder to complete shearing of a strip.
